# EUROPÄISCHE PATENTSCHRIFT

(11) **EP 1 280 730 B1**
(45) Veröffentlichungstag und Bekanntmachung des Hinweises auf die Patenterteilung: **26.04.2006**
(21) Anmeldenummer: 01933955.5
(22) Anmeldetag: 10.05.2001
(51) Int. Cl.: C01B 3/00

(54) **TANK ZUR REVERSIBLEN SPEICHERUNG VON WASSERSTOFF**
TANK FOR THE REVERSIBLE STORAGE OF HYDROGEN
RESERVOIR POUR LE STOCKAGE REVERSIBLE D'HYDROGENE

(30) Priorität: 10.05.2000 DE 10022803
(43) Veröffentlichungstag der Anmeldung: 05.02.2003
(73) Patentinhaber: GfE Metalle und Materialien GmbH, 90431 Nürnberg (DE)
(72) Erfinder: GROTE, Frank, 52072 Aachen (DE); BUSSE, Peter, 52072 Aachen (DE); GÜTHER, Volker, 90559 Burgthann (DE); OTTO, Andreas, 90574 Rosstal (DE)
(74) Vertreter: Hübner, Gerd
(86) Internationale Anmeldenummer: PCT/EP2001/005361
(87) Internationale Veröffentlichungsnummer: WO 2001/085604

(56) Entgegenhaltungen:
- DE-A- 3 150 133
- US-A- 4 055 276
- PATENT ABSTRACTS OF JAPAN vol. 004, no. 176 (M-045), 5. Dezember 1980 (1980-12-05) & JP 55 126199 A (MATSUSHITA ELECTRIC IND CO LTD), 29. September 1980 (1980-09-29)
- PATENT ABSTRACTS OF JAPAN vol. 005, no. 189 (M-099), 28. November 1981 (1981-11-28) & JP 56 109998 A (MATSUSHITA ELECTRIC IND CO LTD), 31. August 1981 (1981-08-31)
- PATENT ABSTRACTS OF JAPAN vol. 1996, no. 04, 30. April 1996 (1996-04-30) & JP 07 330302 A (TOYAMA PREF GOV;OTHERS: 06), 19. Dezember 1995 (1995-12-19)
- PATENT ABSTRACTS OF JAPAN vol. 018, no. 006 (M-1537), 7. Januar 1994 (1994-01-07) & JP 05 248598 A (MAZDA MOTOR CORP), 24. September 1993 (1993-09-24)

## Beschreibung

Die Erfindung betrifft einen Tank zur reversiblen Speicherung von Wasserstoff, der eine äußere Druckhülle, eine darin enthaltene Wasserstoffspeicherlegierung, ein Wärmeaustauschsystem und einen Wasserstsoffgassammler umfaßt.

In der Diskussion um die künftigen Systeme zur Energieversorgung spielt Wasserstoff als universeller, reversibel erzeugbarer Energieträger eine herausragende Rolle. Teil einer künftigen Wasserstoff-Energiewirtschaft ist die Speicherung des Wasserstoffs nach seiner Erzeugung (z.B. durch Elektrolyse von Wasser) und Bereitstellung des Wasserstoffs als Verbrennungsgas (z.B. für Verbrennungsmotoren oder Brennstoffzellen).

Zur Speicherung von Wasserstoff gelten folgende drei Systeme als technisch erprobt:
- Speicherung in Druckgastanks (komprimierter, gasförmiger Wasserstoff)
- Speicherung in Kryotanks (tiefkalter flüssiger Wasserstoff)
- Speicherung in Metalllegierungen (chemisch an Metalle gebundener Wasserstoff)

Die Speicherung an definierten geometrischen Strukturen aus Kohlenstofffasern (nanotubes) befindet sich noch in einem frühen Entwicklungsstadium und wurde bislang in einem technischen Maßstab nicht nachgewiesen.

Alle drei Speichermöglichkeiten besitzen spezifische Vor- und Nachteile, von denen die wichtigsten in der folgenden Tabelle aufgelistet sind:

| | Vorteile | Nachteile |
|---|---|---|
| Druckgas | gravimetrische Energiedichte, Belade- und Entladezeit; | volumetrische Energiedichte, Gefährdungspotential; |
| Flüssiggas | Energiedichten; | Energieaufwand zur Verflüssigung und zur Kühlung; |
| Metalllegierung | volumetrische Energiedichte, niedriges Druckniveau, Sicherheit; | gravimetrische Energiedichte, Ab- und Desorptionsraten, Wärmemanagement; |

Tanks mit Wasserstoffspeicherlegierungen sind seit mehr als 25 Jahren bekannt und bestehen aus folgenden grundsätzlichen Komponenten, deren praktische Ausgestaltung von den jeweiligen Einsatzbedingungen abhängt:
- Metalllegierungsbett
   → lose Pulverschüttung in Druckbehältern
   → Pulver, Granalien, Gußblöcke in Kassetten in Druckbehältern
   → Mischung von Pulver / Granalien mit Metalllegierungspulver zur Verbesserung der Wärmeleitfähigkeit
   → kompaktierte Pulver / Granalien mit Bindersystemen
- äußerer Druckbehälter um das Metalllegierungsbett
   → zylinderförmige Rohre mit Klöpperböden
   → flache Geometrien mit kleinen äußeren Abmessungen
- Wärmetauschersystem (extern und/oder intern)
   → Systeme zur Verbesserung der Wärmeleitung im Druckbehälter
   → Kühl/Heizschlangen im Druckbehälter
   → Kühlung/Heizung der Druckbehälterwand von außen
   → Gase, Flüssigkeiten als Wärmetauschermedien
- Wasserstoffsammler
   → feinporige Rohre (<0,5 µm Porengröße) im Druckbehälter.

Größere Tanks mit Wasserstoffspeicherlegierungen werden durch Zusammenschaltung einzelner, kleinerer Einheiten realisiert.

Beispiele für underschiedlichste Tankkonfigurationen sind den PATENT ABSTRACTS OF JAPAN zu den Veröffentlichungen JP 55 126 199A, JP 56 109998A, JP 07 330302A und JP 05 248598A sowie der DE 3150 133A und der US-A-4 055 276 entnehmbar.

Wasserstoffspeicherlegierungen sind dadurch gekennzeichnet, daß die Aufnahme bzw. Abgabe von Wasserstoff bei jeweils einem für die Arbeitstemperatur typischen Gleichgewichtsdruck geschieht. Bei der Absorption muß die Bildungswärme des Metallhydrids aus dem System abgeführt werden (exotherme Reaktion), da sich das Metalllegierungsbett sonst erwärmt und der Gleichgewichtsdruck (Absorption) sich nach oben verschiebt. Umgekehrt muß bei der Desorption Wärme zugeführt werden, da ansonsten das Metalllegierungsbett einfriert und der Gleichgewichtsdruck (Desorption) sinkt.

In der Praxis hat sich für Tanks mit hohen geforderten Sorptionsraten die sogenannte Kassetten-Technik durchgesetzt, wie sie von H. Buchner, "Energiespeicherung in Metallhydriden; Innovative Energietechnik", Springer-Verlag, Wien, New York, 1992, beschrieben wird. Dabei wird die Reaktionswärme durch Wärmeleitung über die Wandung des Druckbehälters und die Kassetten großflächig auf ein Metalllegierungsbett geringer Dicke übertragen, so daß die schlechte Wärmeleitung des Metalllegierungsbettes weniger stark limitierend wirkt. Für Tanks mit geringer Desorptionsrate werden üblicherweise Pulverschüttungen von Metalllegierungen in entsprechenden Druckbehältern verwendet, wobei die Reaktionswärmen über die Wandung des Druckbehälters und Wärmeleitung im Metalllegierungsbett zu- bzw. abgeführt werden.

Tanks mit Wasserstoffspeicherlegierungen sind grundsätzlich Druckbehälter und unterliegen den entsprechenden Vorschriften. Die Auslegung muß dabei nicht nur dem bevorzugten Arbeitsbereich der Metalllegierung entsprechen, sonderen allen denkbaren Bedingungen Rechnung tragen. Dies wird dann ein Problem, wenn ein Tank bereits mit einer relativ niedrigen Temperatur einen hohen Desorptionsdruck aufweisen soll, die äußere Temperatur aber durchaus auch deutlich höher werden kann. Als Beispiel sei ein Tank für ein Kfz mit Verbrennungsmotor genannt, der bei 0°C Wasserstoff mit einem Druck von 2 bar zur Verfügung stellen soll. Bei einer möglichen Maximaltemperatur von 80°C würde sich im Tank ein Gleichgewichtsdruck von ca. 70 bar einstellen, dementsprechend druckfest muß der Tank ausgelegt werden.

Der entscheidende Nachteil von Tanks mit Wasserstoffspeicherlegierungen ist die geringe gravimetrische Energiedichte, die einerseits durch das aktive Metallhydrid, aber auch durch den Druckbehälter und Wärmetauschsysteme bedingt ist. So besitzt der von H. Buchner (s.o.) beschriebene Tank aus dem Flottenversuch von Daimler Benz in Berlin 1994 eine Gesamtmasse von 145 kg, von denen nur 90 kg auf die Metalllegierung entfallen. Das Problem könnte durch eine Vergrößerung des Durchmessers der einzelnen Druckbehälter (größeres Behältervolumen) minimiert werden. Allerdings steigt die geforderte Mindestwandstärke bei gegebenem Maximaldruck an und kompensiert die mögliche Gewichtseinsparung nahezu vollständig. Zudem wird der Wärmetausch mit steigendem Durchmesser erschwert, so daß sich in der Praxis aus einzelnen Druckbehältern bestehende Rohrbündel im Durchmesserbereich zwischen 50 und 120 mm durchgesetzt haben. Die aufgrund der Druckbehälterproblematik geforderte "runde" Geometrie entspricht aber nicht den Wünschen der Anwender, die den Tank (z.B. in Kraftfahrzeugen) in komplexe Hohlräume integrieren möchten.

Der Erfindung liegt die Aufgabe zugrunde, einen leichten, geometrisch universell gestaltbaren Druckbehälter zur Aufnahme eines Wasserstoffspeicherlegierungsbettes zur Verfügung zu stellen.

Die Aufgabe wird gelöst durch einen Tank zur reversiblen Speicherung von Wasserstoff, umfassend eine äußere Druckhülle, eine darin enthaltene Wasserstoffspeicherlegierung, ein Wärmeaustauschsystem und einen Wasserstoffgassammler, der dadurch gekennzeichnet ist, daß der Tank ein Bett für die Aufnahme der Wasserstoffspeicherlegierung aufweist, welches aus einem stoffschlüssig mit der Druckbehälterwand verbundenen, offenporigen, metallischen Schwamm besteht.

Vorzugsweise besteht der Druckbehälter aus einem Metall oder einer metallischen Legierung, und insbesondere bestehen der Druckbehälter und der metallische Schwamm aus Aluminium oder einer Aluminiumlegierung. Die Porosität des metallischen Schwammes liegt vorzugsweise zwischen 50 % und 90 %.

In einer bevorzugten Ausführungsform der Erfindung bestehen der Druckbehälter aus Aluminium bzw. einer Aluminiumlegierung und der metallische Schwamm aus Magnesium bzw. einer Magnesiumlegierung.

In einer weiteren bevorzugten Ausführungsform handelt es sich bei dem Wasserstoffspeichertank um einen Tank für ein mit Brennstoffzellen angetriebenes Fahrzeug.

In den Zeichnungen zeigen
- Fig. 1: eine schematische Darstellung eines erfindungsgemäßen Wasserstoffspeichertanks im Querschnitt, und
- Fig. 2: eine schematische Darstellung eines erfindungsgemäßen Wasserstoffspeichertanks im Längsschnitt.

Dabei haben die Zahlen 1 bis 5 die folgende Bedeutung:
- 1: Kühlwassereinlauf
- 2: Kühlwasserauslauf
- 3: Wasserstoffsammler
- 4: Metalllegierungsbett (offenporiger, mit Metalllegierungspulver gefüllter Metallschwamm)
- 5: Verschluß-Halbschale (mit Metallgehäuse verschweißt)

Die Erfindung basiert auf der Integration eines offenporigen metallischen Schwammes mit großem Porendurchmesser in ein bezüglich des maximalen Porendurchmessers ausgelegtes dünnwandiges Druckgefäß aus vorzugsweise dem gleichen Metallmaterial.

Die Integration wird erreicht, indem ein nach einer Seite offenes Gefäß aus Blech gefertigt wird und die Herstellung des metallischen Schwammes in diesem Gefäß erfolgt. Durch den auf dem Metallgußverfahren basierenden Schwammherstellungsprozeß wird das Schwammmaterial an den Kontaktstellen mit dem Material der Behälterwand verbunden, so daß die einzelnen entstehenden, miteinander durch Durchstoßpunkte verbundenen runden Poren nur "punktförmig" auf die Behälterwand treffen. Damit entstehen an der Behälterwand Druckverhältnisse, wie sie analog in Hohlkugeln des maximalen Porendurchmessers vorliegen. Entsprechend diesem Durchmesser muß die drucktechnische Auslegung der Dicke der Behälterwand erfolgen. Die Geometrie des gesamten Behälters ist dabei beliebig variierbar, und dies ist der Kern der vorliegenden Erfindung.

Durch die offenporige Metallschwammstruktur werden die drucktechnischen Verhältnisse einer Kugelform mit kleinem Durchmesser auf ein aus vielen derartigen Hohlkugeln bestehendes, geometrisch ausgedehntes Druckgefäß adaptiert, so daß die Behälterwand relativ dünn gestaltet werden kann, und weiterhin wird eine effektive Wärmeleitung sowohl zur Behälterwand als auch zu integrierten Wärmetauschern, die während des Gußprozesses zur Herstellung des Schwammes in die Struktur eingegossen werden können, gewährleistet.

Die Herstellung der Tanks kann nach dem in der DE-C-197 25 210 beschriebenen Verfahren erfolgen. Der Inhalt dieser Patentschrift soll hier mitumfaßt sein. Bei einer bevorzugten Verfahrensweise wird der Speicher in einem einzigen Gußprozeß hergestellt, bei dem sowohl die Schwammstruktur als auch die Behälterwand ausgebildet werden. Bei weiteren bevorzugten Ausführungsformen erfolgt die stoffschlüssige Anbindung des metallischen Schwamms an die Druckbehälterwand durch Angießen von flüssigem Metall an die Wand, durch Schweißen oder durch Löten.

Als Metalle oder Metalllegierungen für den metallischen Schwamm kommen insbesondere Aluminium, Magnesium, Eisen, Nickel, Kupfer, Zink, Blei, Zinn und deren Legierungen in Betracht. Vorzugsweise werden Aluminium oder Magnesium und deren Legierungen als metallisches Material verwendet.

Wasserstoffspeicherlegierungen lassen sich entsprechend ihrer Arbeitstemperatur in Niedertemperatur- und Hochtemperaturlegierungen unterscheiden. Dabei sind die Niedertemperaturhydride thermodynamisch weniger stabil, d.h. die auszutauschenden Reaktionswärmen sind deutlich kleiner als bei Hochtemperaturhydriden. Die gebräuchlichsten Basistypen von Niedertemperatur-Wasserstoffspeicherlegierungen mit maximalen Speicherkapazitäten von ca. 2 Gew.-% Wasserstoff sind:

| | |
|---|---|
| AB-Legierungen: | FeTi, LaNi |
| AB₂-Legierungen: | Zr(V,Mn)₂, Ti(V,Mn)₂ |
| AB₅-Legierungen: | LaNi₅, CaNi₅ |

Praktisch relevante Hochtemperaturhydride besitzen Mg als Hauptbestandteil (MgH₂, Mg₂Ni) und weisen deutlich höhere Speicherkapazitäten von bis zu 7,6 Gew.-% auf. Die erforderlichen Desorptionstemperaturen von >200°C und die vergleichsweise hohen spezifischen Desorptionsenergien schränken die praktische Nutzung gegenwärtig jedoch ein. Eine Übersicht über die Anwendung von Wasserstoffspeicherlegierungen wird von V. Güther und A. Otto in "Recent Developments in Hydrogen Storage Applications Based on Metal Hydrides", J. of Alloys and Compounds 1999, 295, Seiten 889-892 beschrieben.

Weitere geeignete Wasserstoffspeicherlegierungen sind im Stand der Technik umfangreich beschrieben worden. Für die Durchführung der vorliegenden Erfindung kommt jede geeignete Wasserstoffspeicherlegierung in Betracht. Stellvertretend soll hier auf die folgenden Patentschriften verwiesen werden: DE-C-30 31 471, DE-C-30 23 770, DE-C-31 51 712, DE-C-31 39 368 und US-A-41 60 014. Vorzugsweise werden die in der DE-C-34 11 011 beschriebenen Wasserstoffspeicherlegierungen eingesetzt.

### Beispiel

Ein Aluminium-Blech wird in Form eines U gebogen, wobei die Enden halbkreisförmig nach innen gebogen werden und eine Öffnung mit einer Breite von 50 mm freilassen. An beiden Seiten wird in die Schenkel des U ein Blech eingeschweißt, so daß ein schmales, nach oben halb offenes Gefäß entsteht. Die Länge des Gefäßes beträgt 800 mm, die Breite 120 mm und die Höhe 250 mm. In eines der angeschweißten Seitenteile wird ein Aluminiumrohr eingeschweißt, das sich mäanderförmig durch das Gefäß zieht und an einer zweiten Stelle der selben Fläche wieder nach außen geführt wird. Das Gefäß wird mit kugelförmigen Platzhaltern aus mit einem Binder versetzten Quarzsand gemäß DE-C-197 25 210 ausgefüllt. Die Quarzsandkugeln besitzen eine bimodale Verteilung des Durchmessers (ca. 30 mm und ca. 10 mm), so daß ein Raumerfüllungsgrad von ca. 83 % entsteht. Die entstehenden Hohlräume werden entsprechend der zitierten Patentschrift mit Aluminium ausgegossen. Durch die entstehende Gußwärme wird das Bindersvstem der Platzhalter aufgelöst, wodurch der Quarzsand aus den Poren entfernt werden kann. An den Kontaktstellen des Schwammes mit der Wandung sowie dem Wärmetauscher ergibt sich durch Anschmelzen eine feste stoffschlüssige Verbindung.

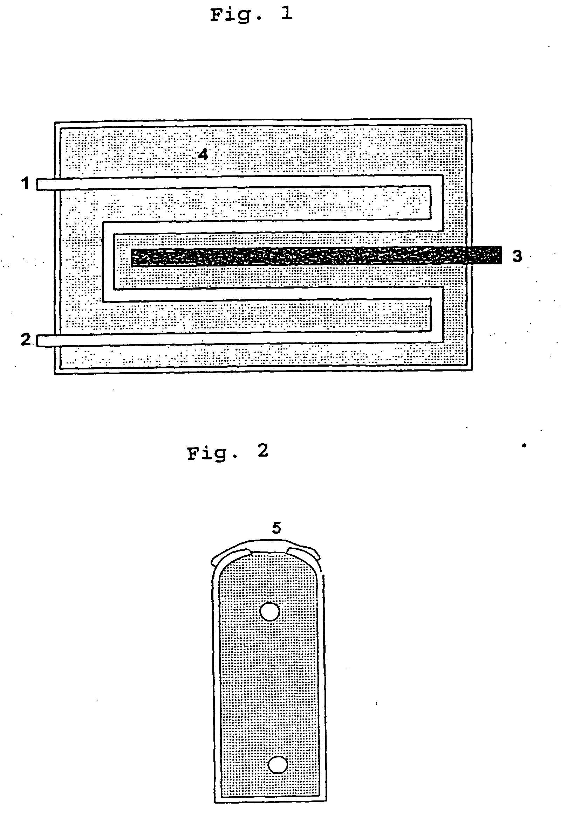

Das Resultat ist ein dünnwandiges Druckgefäß mit einer für Druckgefäße bisher nicht realisierten flachen Geometrie. Zentral entlang der Längsachse wird ein Loch in ein Seitenteil gebohrt und ein Gassammler eingesetzt, mit der Wandung verschweißt und nach außen geführt. In die offene Porenstruktur wird ein Wasserstoffspeicherlegierungspulver eingerüttelt. Anschließend wird die obere Öffnung mit einer Halbschale aus einem den dort herrschenden Druckverhältnissen entsprechenden Dicke verschweißt (s. Fig. 1 und 2).

In dem beschriebenen Tank lassen sich ca. 60 kg Metalllegierung (entspricht ca. 960 g Wasserstoff bzw. 31 kWh) speichern. Das Eigengewicht des leeren Tanks inklusive Wärmetauscher und Gassammler beträgt dabei lediglich ca. 18,4 kg und liegt damit deutlich unter den spezifischen Gewichtsanteilen herkömmlicher Tanks.

Neben der beliebig gestaltbaren Geometrie besitzt der Tank eine im Vergleich zu solchen herkömmlicher Bauart wesentlich überlegene innere Wärmeleitfähigkeit zwischen dem Metalllergierungsbett und dem Wärmetauschmedium, so daß die Absorptions- und Desorptionsraten für Wasserstoff, die durch den Reaktionswärmetransfer limitiert sind, gesteigert werden können.

## Patentansprüche

1. Tank zur reversiblen Speicherung von Wasserstoff, umfassend einen äußeren Druckbehälter, eine darin enthaltene Wasserstoffspeicherlegierung, ein Wärmetauschsystem und einen Wasserstoffgassammler, **dadurch gekennzeichnet, daß** der Tank ein Bett zur Aufnahme der Wasserstoffspeicherlegierung aufweist, welches aus einem stoffschlüssig mit der Druckbehälterwand verbundenen, offenporigen, metallischen Schwamm besteht.

2. Tank nach Anspruch 1, **dadurch gekennzeichnet, daß** der Druckbehälter aus einem Metall oder einer metallischen Legierung besteht.

3. Tank nach einem der Ansprüche 1 oder 2, **dadurch gekennzeichnet, daß** der Druckbehälter und der offenporige metallische Schwamm aus Aluminium oder einer Aluminiumlegierung bestehen.

4. Tank nach den Ansprüchen 1 oder 2, **dadurch gekennzeichnet, daß** der Druckbehälter aus Aluminium bzw. einer Aluminiumlegierung und der metallische Schwamm aus Magnesium bzw. einer Magnesiumlegierung besteht.

5. Tank nach mindestens einem der Ansprüche 1 bis 4, **dadurch gekennzeichnet, daß** die Porosität des metallischen Schwammes zwischen 50 % und 90 % liegt.

6. Tank nach mindestens einem der Ansprüche 1 bis 5, **dadurch gekennzeichnet, daß** es sich um einen Tank für ein mit Brennstoffzellen angetriebenes Kraftfahrzeug handelt.

7. Verfahren zur Herstellung eines Tanks nach den Ansprüchen 1 bis 3, 5 und 6; **dadurch gekennzeichnet, daß** der Speicher. in einem einzigen Gußprozeß hergestellt wird, bei dem sowohl die Schwammstruktur als auch die Behälterwand ausgebildet werden.

8. Verfahren zur Herstellung eines Tanks nach den Ansprüchen 1 bis 6, **dadurch gekennzeichnet, daß** die stoffschlüssige Anbindung des metallischen Schwamms an die Druckbehälterwand durch Angießen von flüssigem Metall an die Wand erfolgt.

9. Verfahren zur Herstellung eines Tanks nach den Ansprüchen 1 bis 6, **dadurch gekennzeichnet, daß** die stoffschlüssige Anbindung des metallischen Schwamms an die Druckbehälterwand durch Schweißen erfolgt.

10. Verfahren zur Herstellung eines Tanks nach den Ansprüchen 1 bis 6, **dadurch gekennzeichnet, daß** die stoffschlüssige Anbindung des metallischen Schwamms an die Druckbehälterwand durch Löten erfolgt.

## Claims

1. Tank for the reversible storage of hydrogen, comprising an external pressure casing, a hydrogen-storage alloy contained therein, a heat-exchange system and a hydrogen-gas reservoir, **characterized in that**, for the absorption of the hydrogen-storage alloy, the tank has a bed which consists of an open-pored metal sponge connected to the pressure-vessel wail in a material fit.

2. Tank according to claim 1, **characterized in that** the pressure vessel consists of a metal or a metal alloy.

3. Tank according to one of claims 1 or 2, **characterized in that** the pressure vessel and the open-pored metal sponge consist of aluminium or an aluminium alloy.

4. Tank according to claims 1 or 2, **characterized in that** the pressure vessel consists of aluminium or an aluminium alloy and the metal sponge consists of magnesium or a magnesium alloy.

5. Tank according to at least one of claims 1 to 4, **characterized in that** the porosity of the metal sponge is between 50 % and 90 %.

6. Tank according to at least one of claims 1 to 5, **characterized in that** it is a tank for a motor vehicle powered by fuel cells.

7. Process for the manufacture of a tank according to claims 1 to 3, 5 and 6, **characterized in that** the storage means are prepared in a single casting process, in which both the sponge structure and the vessel wall are developed.

8. Process for the manufacture of a tank according to claims 1 to 6, **characterized in that** the metal sponge is connected to the pressure-vessel wail in a material fit by pouring liquefied metal against the wail.

9. Process for the manufacture of a tank according to claims 1 to 6, **characterized in that** the metal sponge is connected to the pressure-vessel wail in a material fit by welding.

10. Process for the manufacture of a tank according to claims 1 to 6, **characterized in that** the metal sponge is connected to the pressure-vessel wail in a material fit by soldering.

## Revendications

1. Réservoir pour le stockage réversible d'hydrogène, comprenant un récipient sous pression extérieur, un alliage de stockage d'hydrogène, un système à échangeur de chaleur et un collecteur d'hydrogène gazeux, **caractérisé en ce que** le réservoir présente un lit pour recevoir l'alliage de stockage d'hydrogène, lequel est constitué par une éponge métallique à pores ouverts, reliée par coopération de substances avec la paroi du récipient sous pression.

2. Réservoir selon la revendication 1, **caractérisé en ce que** le récipient sous pression est constitué par un métal ou par un alliage métallique.

3. Réservoir selon l'une des revendications 1 ou 2, **caractérisé en ce que** le récipient sous pression et l'éponge métallique à pores ouverts sont en aluminium ou en un alliage d'aluminium.

4. Réservoir selon l'une des revendications 1 ou 2, **caractérisé en ce que** le récipient sous pression est en aluminium ou en alliage d'aluminium et l'éponge métallique est en magnésium ou en un alliage de magnésium.

5. Réservoir selon au moins l'une des revendications 1 à 4, **caractérisé en ce que** la porosité de l'éponge métallique est entre 50 % et 90 %.

6. Réservoir selon au moins l'une des revendications 1 à 5, **caractérisé en ce que** le réservoir est destiné à un véhicule automobile entraîné par des cellules à combustible.

7. Procédé de fabrication d'un réservoir selon les revendications 1 à 3, 5 et 6, **caractérisé en ce que** le réservoir est fabriqué en un seul processus de coulée dans lequel sont formées à la fois la structure d'éponge et la paroi de récipient.

8. Procédé de fabrication d'un réservoir selon les revendications 1 à 6, **caractérisé en ce que** la liaison par coopération de substances de l'éponge métallique à la paroi du récipient sous pression a lieu par surmoulage de métal liquide contre la paroi.

9. Procédé de fabrication d'un réservoir selon les revendications 1 à 6, **caractérisé en ce que** la liaison par coopération de substances de l'éponge métallique à la paroi du récipient sous pression a lieu par soudage.

10. Procédé de fabrication d'un réservoir selon les revendications 1 à 6, **caractérisé en ce que** la liaison par coopération de substances de l'éponge métallique à la paroi du récipient sous pression a lieu par brasage.
